# EUROPEAN PATENT APPLICATION

(11) **EP 4 376 526 A1**
(43) Date of publication of application: **29.05.2024**
(21) Application number: 22857303.6
(22) Date of filing: 15.04.2022
(51) Int. Cl.: H04W 72/04

(54) **NETWORK SLICE CONTROL INFORMATION SENDING METHOD AND APPARATUS, NETWORK SLICE CONTROL INFORMATION RECEIVING AND PROCESSING METHOD AND APPARATUS, COMMUNICATION NODE AND COMPUTER-READABLE STORAGE MEDIUM**

(30) Priority: 20.08.2021 CN 202110960502
(71) Applicant: ZTE Corporation, Shenzhen, Guangdong 518057 (CN)
(72) Inventor: XU, Wanfu, Shenzhen, Guangdong 518057 (CN); XIE, Feng, Shenzhen, Guangdong 518057 (CN); LI, Jie, Shenzhen, Guangdong 518057 (CN)
(74) Representative: Aipex B.V.
(86) International application number: PCT/CN2022/087137
(87) International publication number: WO 2023/019985

(57) **Abstract**

Provided are a network slice control information sending method and apparatus, a network slice control information receiving and processing method and apparatus, a communication node, and a computer-readable storage medium. The network slice control information sending method includes that a first communication node generates downlink control information for indicating network slice information; and the first communication node sends the downlink control information to a second communication node.

## Description

This application claims priority to Chinese Patent Application No. 202110960502.9 filed Aug. 20, 2021, the disclosure of which is incorporated herein by reference in its entirety.

### TECHNICAL FIELD

The present application relates to the field of wireless communication technology, particularly a network slice control information sending method and apparatus, a network slice control information receiving and processing method and apparatus, a communication node, and a computer-readable storage medium.

### BACKGROUND

In various emerging application scenarios such as Enhanced Mobile Broadband (eMBB), ultra reliable low latency communications (uRLLC), massive Internet of Things (mIoT), and vehicle-to-everything (V2X), a network slice identifier defined in a communication standard may be single-network slice selection assistance information (S-NSSAI). S-NSSAI is an end-to-end network slice identifier, that is, a network slice identifier that can be identified by a user equipment (UE), a base station, and a core-network device. S-NSSAI is made up of slice/service type (SST) and slice differentiator (SD). SST is at the upper 8 bits of S-NSSAI to distinguish between types of network slice application scenarios. SD is at the lower 24 bits (lower than SST) of S-NSSAI to distinguish between network slices. For example, when SST is V2X, SD can be used to distinguish between vehicle enterprises.

However, regarding current uplink scheduling and resource allocation, resources are allocated in descending order of priority to only logical channels satisfying conditions. The conditions include subcarrier spacing (SCS), physical uplink shared channel (PUSCH) transmission duration, cell information, physical layer (PHY) priority, and configured grant (CG). As a result, scheduling and resource allocation can be performed based on only logical channel priority and cannot be performed based on a network slice.

### SUMMARY

An embodiment of the present application provides a network slice control information sending method. The method includes that a first communication node generates downlink control information for indicating network slice information; and the first communication node sends the downlink control information to a second communication node.

An embodiment of the present application provides a network slice control information receiving and processing method. The method includes that a second communication node receives downlink control information for indicating network slice information to the second communication node; and the second communication node performs an operation about a network slice according to the downlink control information.

An embodiment of the present application provides a network slice control information sending apparatus. The apparatus includes a generation module configured to generate downlink control information for indicating network slice information; and a sending module configured to send the downlink control information to a second communication node.

An embodiment of the present application provides a network slice control information receiving and processing apparatus. The apparatus includes a receiving module configured to receive downlink control information for indicating network slice information to the apparatus; and a processing module configured to perform an operation about a network slice according to the downlink control information.

An embodiment of the present application provides a communication node. The communication node includes a memory storing a computer program; and a processor which, when executing the computer program, performs the network slice control information sending method of any embodiment of the present application or the network slice control information receiving and processing method of any embodiment of the present application.

An embodiment of the present application provides a computer-readable storage medium storing a computer program which, when executed by a processor, causes the processor to perform the network slice control information sending method of any embodiment of the present application or the network slice control information receiving and processing method of any embodiment of the present application.

### BRIEF DESCRIPTION OF DRAWINGS

FIG. 1 is a flowchart of a network slice control information sending method according to an embodiment of the present application.
FIG. 2 is a flowchart of a network slice control information receiving and processing method according to an embodiment of the present application.
FIG. 3 is a diagram illustrating the structure of a network slice control information sending apparatus according to an embodiment of the present application.
FIG. 4 is a diagram illustrating the structure of a network slice control information receiving and processing apparatus according to an embodiment of the present application.
FIG. 5 is a diagram illustrating the structure of a communication node according to an embodiment of the present application.

### DETAILED DESCRIPTION

To illustrate the object, solutions and advantages of the present application clearer, embodiments of the present application are described hereinafter in detail in conjunction with the drawings. It is to be noted that if not in collision, embodiments of the present application and features therein may be combined with each other in any manner.

Additionally, in embodiments of the present application, words such as "in some embodiments", "for example", or "illustratively" indicate examples, illustrations, or descriptions. Any embodiment or design described as "in some embodiments" or "illustratively" in embodiments of the present application is not to be construed as being more preferred or advantageous than other embodiments or designs. Rather, the words "in some embodiments" or "illustratively" are intended to present related concepts in a specific manner.

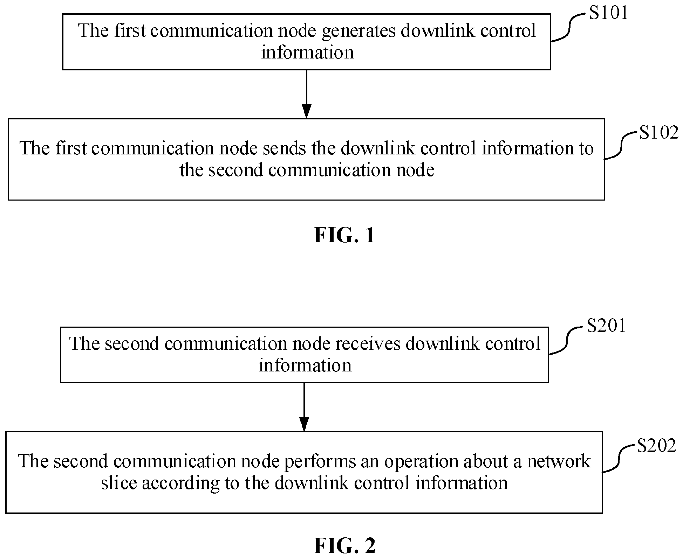

FIG. 1 is a flowchart of a network slice control information sending method according to an embodiment of the present application. The method may be applied to a first communication node. As shown in FIG. 1, the method may include, but is not limited to, operations S101 and S102.

In S101, the first communication node generates downlink control information.

In this embodiment of the present application, the first communication node may be construed as a device (for example, a base station) for sending downlink information, and the downlink control information generated by the first communication node (for example, a base station) indicates network slice information.

In some embodiments, the first communication node may determine and generate the downlink control information based on the network slice capability reported by a second communication node and the network slice capability of the first communication node. In some embodiments, assuming that both the first communication node and the second communication node support all network slices, then the first communication node may also generate the downlink control information based on a scheduling decision factor (for example, the priority level of a network slice). The second communication node here may be construed as a device (for example, a terminal) for sending uplink information to the first communication node.

In S102, the first communication node sends the downlink control information to the second communication node.

The first communication node sends the downlink control information to the second communication node to indicate the network slice information to the second communication node, thereby enabling accurate scheduling and resource allocation based on a network slice in a network. An embodiment of the present application provides a network slice control information sending method. The method includes that a first communication node generates downlink control information for indicating network slice information; and the first communication node sends the downlink control information to a second communication node. Scheduling and resource allocation are performed accurately in a wireless communication network by using the network slice control information sending method.

In some embodiments, the downlink control information may include at least one of a radio resource control (RRC) signaling, a medium access control control element (MAC CE) signaling, or physical downlink control channel downlink control information (PDCCH DCI).

In some embodiments, the downlink control information generated by the first communication node may carry a network slice index set, the ordering of indexes in the network slice index set, and the index of a target available network slice. The index of the target available network slice indicates a network slice contained in an available network slice set, determined by the first communication node, and configured for logical channel multiplexing by the second communication node. Accordingly, the index of the target available network slice indicates a network slice for logical channel multiplexing by the second communication node.

In some embodiments, different pieces of downlink control information, each piece among which carries a network slice index set, the ordering of indexes in the network slice index set, and the index of a target available network slice, may be sent in the following different manners:
In a case where the RRC signaling includes the network slice index set, the RRC signaling includes the ordering of the indexes in the network slice index set and the index of the target available network slice; or in a case where the RRC signaling includes the network slice index set, the MAC CE signaling includes the ordering of the indexes in the network slice index set and the index of the target available network slice; or in a case where the RRC signaling includes the network slice index set, the MAC CE signaling includes the ordering of the indexes in the network slice index set, and the PDCCH DCI includes the index of the target available network slice; or in a case where the RRC signaling includes the network slice index set, the RRC signaling includes the ordering of the indexes in the network slice index set, and the PDCCH DCI includes the index of the target available network slice.

In some embodiments, in a case where the PDCCH DCI includes the index of the target available network slice, the RRC signaling includes the bit length of the index of the target available network slice, or the MAC CE signaling includes the bit length of the index of the target available network slice. For example, 0 to 3 bits are used to carry the index of the target available network slice.

In some embodiments, the RRC signaling also includes an identifier for indicating whether to perform logical channel multiplexing based on a network slice; or the MAC CE signaling includes an identifier for indicating whether to perform logical channel multiplexing based on a network slice; or the PDCCH DCI includes an identifier for indicating whether to perform logical channel multiplexing based on a network slice. For example, the length of the identifier for indicating whether to perform logical channel multiplexing based on a network slice may be 1 bit. 1 indicates performing logical channel multiplexing based on a network slice, and 0 indicates not performing logical channel multiplexing based on a network slice; or 0 indicates performing logical channel multiplexing based on a network slice, and 1 indicates not performing logical channel multiplexing based on a network slice.

In some embodiments, the RRC signaling, the MAC CE signaling, or the PDCCH DCI may also include a UE-level network slice identifier or a logical-channel-level network slice identifier. The UE-level network slice identifier indicates that all the logical channels of a network slice use the same network slice multiplexing rule. The logical-channel-level network slice identifier indicates that all the logical channels use different network slice multiplexing rules. That is, all the logical channels use at least two network slice multiplexing rules. For example, logical channel multiplexing may be performed for some logical channels based on the priority level of a logical channel while packet multiplexing may be performed for some logical channels based on a network slice identifier.

In some embodiments, the PDCCH DCI may include two different fields or one combination field.

FIG. 2 is a flowchart of a network slice control information receiving and processing method according to an embodiment of the present application. The method may be applied to a second communication node. As shown in FIG. 2, the method may include, but is not limited to, operations S201 and S202.

In S201, the second communication node receives downlink control information.

The second communication node of this embodiment of the present application may be construed as a device (for example, a terminal) for sending uplink information. The downlink control information indicates network slice information to the second communication node. In some embodiments, the downlink control information received by the second communication node may be generated by a base station based on the network slice capability reported by the second communication node and the network slice capability of the base station. In some embodiments, the base station may also generate the downlink control information based on a scheduling decision factor (for example, the priority level of a network slice).

In S202, the second communication node performs an operation about a network slice according to the downlink control information.

In some embodiments, the downlink control information may include at least one of a radio resource control (RRC) signaling, a medium access control control element (MAC CE) signaling, or physical downlink control channel downlink control information (PDCCH DCI). In some embodiments, the RRC signaling also includes an identifier for indicating whether to perform logical channel multiplexing based on a network slice; or the MAC CE signaling includes an identifier for indicating whether to perform logical channel multiplexing based on a network slice; or the PDCCH DCI includes an identifier for indicating whether to perform logical channel multiplexing based on a network slice. For example, the length of the identifier for indicating whether to perform logical channel multiplexing based on a network slice may be 1 bit. 1 indicates performing logical channel multiplexing based on a network slice, and 0 indicates not performing logical channel multiplexing based on a network slice; or 0 indicates performing logical channel multiplexing based on a network slice, and 1 indicates not performing logical channel multiplexing based on a network slice.

In some embodiments, in a case where the downlink control information indicates that the logical channel multiplexing is performed based on the network slice, the second communication node may perform logical channel multiplexing according to the downlink control information based on a network slice indicated by the downlink control information; or in a case where the downlink control information indicates that the logical channel multiplexing is not performed based on the network slice, the second communication node may ignore the downlink control information and not strictly perform logical channel multiplexing based on a network slice indicated by the downlink control information.

This embodiment of the present application provides a network slice control information receiving and processing method. The method includes that the second communication node receives downlink control information for indicating network slice information to the second communication node; and the second communication node performs an operation about a network slice according to the downlink control information. The method enables accurate scheduling and resource allocation based on a network slice in a network.

In some embodiments, the second communication node performs logical channel multiplexing according to the downlink control information based on a network slice indicated by the downlink control information in the following manners:
If the downlink control information indicates scheduling based on a network slice, the second communication node may select the highest-priority logical channel based on the priority level of the logical channel and perform logical channel multiplexing based on the network slice corresponding to the selected logical channel, where packet multiplexing cannot be performed based on a logical channel not belonging to the network slice; and if the downlink control information explicitly indicates the network slice scheduled for this time, the second communication node may perform logical channel multiplexing based on the indicated network slice and the priority level of the logical channel of the network slice, where packet multiplexing cannot be performed based on a logical channel not belonging to the network slice.

For example, the RRC signaling, the MAC CE signaling, or the PDCCH DCI may include a UE-level network slice identifier or a logical-channel-level network slice identifier. The UE-level network slice identifier indicates that all the logical channels of a network slice use the same network slice multiplexing rule. The logical-channel-level network slice identifier indicates that all the logical channels use different network slice multiplexing rules. That is, all the logical channels use at least two network slice multiplexing rules. For example, logical channel multiplexing may be performed for some logical channels based on the priority level of a logical channel while packet multiplexing may be performed for some logical channels based on a network slice identifier.

In some embodiments, the downlink control information may carry a network slice index set, the ordering of indexes in the network slice index set, and the index of a target available network slice. The index of the target available network slice indicates a network slice for logical channel multiplexing by the second communication node, that is, the preceding scheduled network slice. In some embodiments, in a case where the RRC signaling includes the network slice index set, the RRC signaling includes the ordering of the indexes in the network slice index set and the index of the target available network slice; or in a case where the RRC signaling includes the network slice index set, the MAC CE signaling includes the ordering of the indexes in the network slice index set and the index of the target available network slice; or in a case where the RRC signaling includes the network slice index set, the MAC CE signaling includes the ordering of the indexes in the network slice index set, and the PDCCH DCI includes the index of the target available network slice; or in a case where the RRC signaling includes the network slice index set, the RRC signaling includes the ordering of the indexes in the network slice index set, and the PDCCH DCI includes the index of the target available network slice.

In some embodiments, in a case where the MAC CE signaling includes the network slice index set, the MAC CE signaling includes the ordering of the indexes in the network slice index set and the index of the target available network slice; or in a case where the MAC CE signaling includes the network slice index set, the MAC CE signaling includes the ordering of the indexes in the network slice index set, and the PDCCH DCI includes the index of the target available network slice.

In some embodiments, in a case where the PDCCH DCI includes the index of the target available network slice, the RRC signaling includes the bit length of the index of the target available network slice, or the MAC CE signaling includes the bit length of the index of the target available network slice. For example, 0 to 3 bits are used to carry the index of the target available network slice.

In some embodiments, the PDCCH DCI may include two different fields or one combination field.

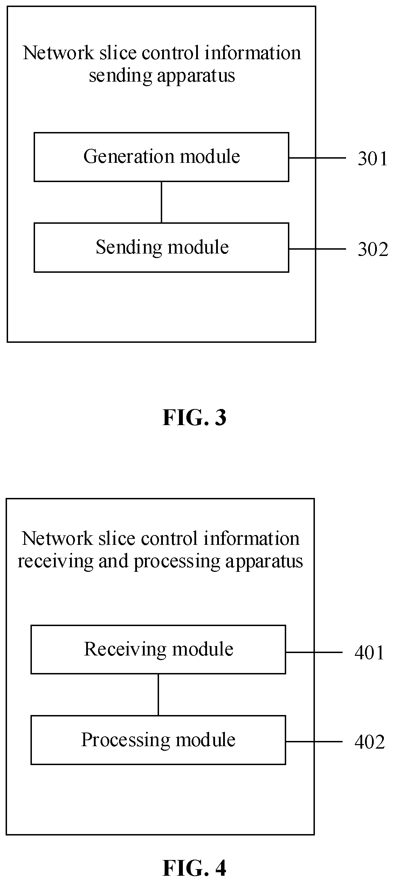

FIG. 3 is a diagram illustrating the structure of a network slice control information sending apparatus according to an embodiment of the present application. As shown in FIG. 3, the network slice control information sending apparatus may include a generation module 301 and a sending module 302.

The generation module 301 is configured to generate downlink control information for indicating network slice information.

The sending module 302 is configured to send the downlink control information to a second communication node.

The downlink control information is determined by the network slice control information sending apparatus based on a network slice capability reported by the second communication node and a network slice capability of the apparatus.

In some embodiments, the downlink control information may include at least one of a radio resource control (RRC) signaling, a medium access control control element (MAC CE) signaling, or physical downlink control channel downlink control information (PDCCH DCI). In some embodiments, the downlink control information may carry a network slice index set, the ordering of indexes in the network slice index set, and the index of a target available network slice. The index of the target available network slice indicates a network slice for logical channel multiplexing by the second communication node.

In some embodiments, different pieces of downlink control information, each piece among which carries a network slice index set, the ordering of indexes in the network slice index set, and the index of a target available network slice, may be sent in the following different manners:
In a case where the RRC signaling includes the network slice index set, the RRC signaling includes the ordering of the indexes in the network slice index set and the index of the target available network slice; or in a case where the RRC signaling includes the network slice index set, the MAC CE signaling includes the ordering of the indexes in the network slice index set and the index of the target available network slice; or in a case where the RRC signaling includes the network slice index set, the MAC CE signaling includes the ordering of the indexes in the network slice index set, and the PDCCH DCI includes the index of the target available network slice; or in a case where the RRC signaling includes the network slice index set, the RRC signaling includes the ordering of the indexes in the network slice index set, and the PDCCH DCI includes the index of the target available network slice.

In some embodiments, in a case where the MAC CE signaling includes the network slice index set, the MAC CE signaling includes the ordering of the indexes in the network slice index set and the index of the target available network slice; or in a case where the MAC CE signaling includes the network slice index set, the MAC CE signaling includes the ordering of the indexes in the network slice index set, and the PDCCH DCI includes the index of the target available network slice.

In some embodiments, in a case where the PDCCH DCI includes the index of the target available network slice, the RRC signaling includes the bit length of the index of the target available network slice, or the MAC CE signaling includes the bit length of the index of the target available network slice.

In some embodiments, the RRC signaling also includes an identifier for indicating whether to perform logical channel multiplexing based on a network slice; or the MAC CE signaling includes an identifier for indicating whether to perform logical channel multiplexing based on a network slice; or the PDCCH DCI includes an identifier for indicating whether to perform logical channel multiplexing based on a network slice.

In some embodiments, the PDCCH DCI may include two different fields or one combination field. The network slice control information sending apparatus of this embodiment is configured to perform the network slice control information sending method shown in FIG. 1. The implementation principle and effect of the network slice control information sending apparatus are similar to those of the network slice control information sending method and thus are not described again here.

FIG. 4 is a diagram illustrating the structure of a network slice control information receiving and processing apparatus according to an embodiment of the present application. As shown in FIG. 4, the network slice control information receiving and processing apparatus may include a receiving module 401 and a processing module 402.

The receiving module 401 is configured to receive downlink control information for indicating network slice information to the apparatus.

The processing module 402 is configured to perform an operation about a network slice according to the downlink control information.

In some embodiments, the downlink control information may include at least one of a radio resource control (RRC) signaling, a medium access control control element (MAC CE) signaling, or physical downlink control channel downlink control information (PDCCH DCI). In some embodiments, the RRC signaling also includes an identifier for indicating whether to perform logical channel multiplexing based on a network slice; or the MAC CE signaling includes an identifier for indicating whether to perform logical channel multiplexing based on a network slice; or the PDCCH DCI includes an identifier for indicating whether to perform logical channel multiplexing based on a network slice.

In some embodiments, in a case where the downlink control information indicates that the logical channel multiplexing is performed based on the network slice, the processing module 402 may be configured to perform logical channel multiplexing according to the downlink control information based on a network slice indicated by the downlink control information; or in a case where the downlink control information indicates that the logical channel multiplexing is not performed based on the network slice, the processing module 402 may be configured to ignore the downlink control information and not strictly perform logical channel multiplexing based on a network slice indicated by the downlink control information.

In some embodiments, the processing module 402 is also configured to perform the logical channel multiplexing based on a network slice corresponding to the highest-priority logical channel; or perform the logical channel multiplexing based on a network slice indicated by the downlink control information and the priority level of the logical channel of the network slice.

In some embodiments, the downlink control information may carry a network slice index set, the ordering of indexes in the network slice index set, and the index of a target available network slice. The index of the target available network slice indicates a network slice for logical channel multiplexing by the apparatus.

In a case where the RRC signaling includes the network slice index set, the RRC signaling includes the ordering of the indexes in the network slice index set and the index of the target available network slice; or in a case where the RRC signaling includes the network slice index set, the MAC CE signaling includes the ordering of the indexes in the network slice index set and the index of the target available network slice; or in a case where the RRC signaling includes the network slice index set, the MAC CE signaling includes the ordering of the indexes in the network slice index set, and the PDCCH DCI includes the index of the target available network slice; or in a case where the RRC signaling includes the network slice index set, the RRC signaling includes the ordering of the indexes in the network slice index set, and the PDCCH DCI includes the index of the target available network slice.

In some embodiments, in a case where the MAC CE signaling includes the network slice index set, the MAC CE signaling includes the ordering of the indexes in the network slice index set and the index of the target available network slice; or in a case where the MAC CE signaling includes the network slice index set, the MAC CE signaling includes the ordering of the indexes in the network slice index set, and the PDCCH DCI includes the index of the target available network slice.

In some embodiments, in a case where the PDCCH DCI includes the index of the target available network slice, the RRC signaling includes the bit length of the index of the target available network slice, or the MAC CE signaling includes the bit length of the index of the target available network slice.

In some embodiments, the PDCCH DCI may include two different fields or one combination field. The network slice control information receiving and processing apparatus of this embodiment is configured to perform the network slice control information receiving and processing method shown in FIG. 2. The implementation principle and effect of the network slice control information receiving and processing apparatus are similar to those of the network slice control information receiving and processing method and thus are not described again here.

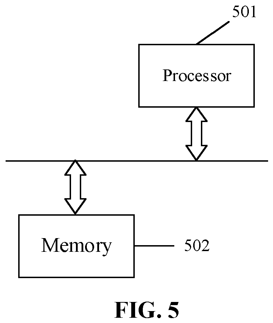

FIG. 5 is a diagram illustrating the structure of a communication node according to an embodiment of the present application. As shown in FIG. 5, the communication node includes a processor 501 and a memory 502. The number of processors 501 in the communication node may be one or more, and one processor 501 is used as an example in FIG. 5. The processor 501 and the memory 502 in the communication node may be connected through a bus or in other manners. In FIG. 5, the connection through the bus is used as an example.

The memory 502 as a computer-readable storage medium may be configured to store software programs and computer-executable programs and modules such as program instructions/modules (for example, the generation module 301 and the sending module 302 of the network slice control information sending apparatus or the receiving module 401 and the processing module 402 of the network slice control information receiving and processing apparatus) corresponding to the sending method shown in FIG. 1 or the receiving and processing method shown in FIG. 2. The processor 501 performs the network slice control information sending method or the network slice control information receiving and processing method by executing the software programs, instructions and modules stored in the memory 502.

The memory 502 may mainly include a program storage region and a data storage region. The program storage region may store an operating system and an application program required by at least one function. The data storage region may store data created according to the use of a set-top box. In addition, the memory 502 may include a high-speed random-access memory and may further include a non-volatile memory, such as at least one disk memory, a flash memory, or another non-volatile solid-state memory.

In some embodiments, the processor 501 in the communication node may perform the network slice control information sending method or the network slice control information receiving and processing method through a hardware circuit such as an internal logic circuit or a gate circuit. A computer-readable storage medium is further provided in the embodiments of the present disclosure. The computer-readable storage medium stores one or more computer programs executable by one or more processors so as to implement the network slice control information sending method or the network slice control information receiving and processing method.

It is to be understood by those of ordinary skill in the art that some or all steps in the preceding disclosed method and function modules/units in the device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components are implementable as software executed by a processor (such as a central processing unit, a digital signal processor, or a microprocessor), are implementable as hardware, or are implementable as integrated circuits such as application-specific integrated circuits. Such software may be distributed on computer-readable media. The computer-readable media may include computer storage media (or non-transitory media) and communication media (or transitory media). As known to those having ordinary skill in the art, the term, the computer storage media, includes volatile and non-volatile as well as removable and non-removable media implemented in any method or technology for storing information (such as computer-readable instructions, data structures, program modules, or other data). The computer storage media include, but are not limited to, a RAM, a ROM, an EEPROM, a flash memory or other memory technologies, a CD-ROM, a digital video disc (DVD) or other optical storages, a magnetic cassette, a magnetic tape, a magnetic disk or other magnetic storage devices, or any other medium that can be used for storing desired information and that can be accessed by a computer. Moreover, as known to those having ordinary skill in the art, the communication media generally include computer-readable instructions, data structures, program modules, or other data in carriers or in modulated data signals transported in other transport mechanisms and may include any information delivery medium.

The preceding example embodiments of the present application are described with reference to the drawings and are not intended to limit the scope of the embodiments of the present application. Any modifications, equivalent replacements and improvements made by any person skilled in the art without departing from the scope and substantive content of the present application should be within the scope of the appended claims.

## Claims

1. A network slice control information sending method, comprising:
generating, by a first communication node, downlink control information for indicating network slice information; and
sending, by the first communication node, the downlink control information to a second communication node.

2. The method of claim 1, wherein the downlink control information is determined based on a network slice capability reported by the second communication node and a network slice capability of the first communication node.

3. The method of claim 1, wherein the downlink control information comprises at least one of a radio resource control, RRC, signaling, a medium access control control element, MAC CE, signaling, or physical downlink control channel downlink control information, PDCCH DCI.

4. The method of claim 3, wherein the downlink control information carries a network slice index set, an ordering of indexes in the network slice index set, and an index of a target available network slice, wherein the index of the target available network slice indicates a network slice for logical channel multiplexing by the second communication node.

5. The method of claim 4, wherein in a case where the RRC signaling comprises the network slice index set, the RRC signaling comprises the ordering of the indexes in the network slice index set and the index of the target available network slice; or
in a case where the RRC signaling comprises the network slice index set, the MAC CE signaling comprises the ordering of the indexes in the network slice index set and the index of the target available network slice; or
in a case where the RRC signaling comprises the network slice index set, the MAC CE signaling comprises the ordering of the indexes in the network slice index set, and the PDCCH DCI comprises the index of the target available network slice; or
in a case where the RRC signaling comprises the network slice index set, the RRC signaling comprises the ordering of the indexes in the network slice index set, and the PDCCH DCI comprises the index of the target available network slice.

6. The method of claim 4, wherein in a case where the MAC CE signaling comprises the network slice index set, the MAC CE signaling comprises the ordering of the indexes in the network slice index set and the index of the target available network slice; or
in a case where the MAC CE signaling comprises the network slice index set, the MAC CE signaling comprises the ordering of the indexes in the network slice index set, and the PDCCH DCI comprises the index of the target available network slice.

7. The method of claim 5 or 6, wherein in a case where the PDCCH DCI comprises the index of the target available network slice, the RRC signaling comprises a bit length of the index of the target available network slice, or the MAC CE signaling comprises a bit length of the index of the target available network slice.

8. The method of any one of claims 3 to 6, wherein the RRC signaling comprises an identifier for indicating whether to perform logical channel multiplexing based on a network slice; or
the MAC CE signaling comprises an identifier for indicating whether to perform logical channel multiplexing based on a network slice; or
the PDCCH DCI comprises an identifier for indicating whether to perform logical channel multiplexing based on a network slice.

9. The method of any one of claims 3 to 6, wherein the PDCCH DCI comprises two different fields, or the PDCCH DCI comprises one field.

10. A network slice control information receiving and processing method, comprising:
receiving, by a second communication node, downlink control information for indicating network slice information to the second communication node; and
performing, by the second communication node, an operation about a network slice according to the downlink control information.

11. The method of claim 10, wherein the downlink control information comprises at least one of a radio resource control, RRC, signaling, a medium access control control element, MAC CE, signaling, or physical downlink control channel downlink control information, PDCCH DCI.

12. The method of claim 11, wherein the RRC signaling comprises an identifier for indicating whether to perform logical channel multiplexing based on a network slice; or
the MAC CE signaling comprises an identifier for indicating whether to perform logical channel multiplexing based on a network slice; or
the PDCCH DCI comprises an identifier for indicating whether to perform logical channel multiplexing based on a network slice.

13. The method of claim 12, wherein performing, by the second communication node, the operation about the network slice according to the downlink control information comprises:
in a case where the downlink control information indicates that the logical channel multiplexing is performed based on the network slice, performing, by the second communication node, logical channel multiplexing of the network slice according to the downlink control information; and
in a case where the downlink control information indicates that the logical channel multiplexing is not performed based on the network slice, ignoring, by the second communication node, the downlink control information.

14. The method of claim 13, wherein performing, by the second communication node, the logical channel multiplexing of the network slice according to the downlink control information comprises:
performing, by the second communication node, the logical channel multiplexing based on a network slice corresponding to a highest-priority logical channel; or
performing, by the second communication node, the logical channel multiplexing based on a network slice indicated by the downlink control information and a priority level of a logical channel of the network slice.

15. The method of claim 11, wherein the downlink control information carries a network slice index set, an ordering of indexes in the network slice index set, and an index of a target available network slice, wherein the index of the target available network slice indicates a network slice for logical channel multiplexing by the second communication node.

16. The method of claim 15, wherein in a case where the RRC signaling comprises the network slice index set, the RRC signaling comprises the ordering of the indexes in the network slice index set and the index of the target available network slice; or
in a case where the RRC signaling comprises the network slice index set, the MAC CE signaling comprises the ordering of the indexes in the network slice index set and the index of the target available network slice; or
in a case where the RRC signaling comprises the network slice index set, the MAC CE signaling comprises the ordering of the indexes in the network slice index set, and the PDCCH DCI comprises the index of the target available network slice; or
in a case where the RRC signaling comprises the network slice index set, the RRC signaling comprises the ordering of the indexes in the network slice index set, and the PDCCH DCI comprises the index of the target available network slice.

17. The method of claim 15, wherein in a case where the MAC CE signaling comprises the network slice index set, the MAC CE signaling comprises the ordering of the indexes in the network slice index set and the index of the target available network slice; or
in a case where the MAC CE signaling comprises the network slice index set, the MAC CE signaling comprises the ordering of the indexes in the network slice index set, and the PDCCH DCI comprises the index of the target available network slice.

18. The method of claim 16 or 17, wherein in a case where the PDCCH DCI comprises the index of the target available network slice, the RRC signaling comprises a bit length of the index of the target available network slice, or the MAC CE signaling comprises a bit length of the index of the target available network slice.

19. The method of any one of claims 15 to 17, wherein the PDCCH DCI comprises two different fields, or the PDCCH DCI comprises one field.

20. A network slice control information sending apparatus, comprising:
a generation module configured to generate downlink control information for indicating network slice information; and
a sending module configured to send the downlink control information to a second communication node.

21. A network slice control information receiving and processing apparatus, comprising:
a receiving module configured to receive downlink control information for indicating network slice information to the apparatus; and
a processing module configured to perform an operation about a network slice according to the downlink control information.

22. A communication node, comprising a memory storing a computer program; and a processor which, when executing the computer program, performs the network slice control information sending method of any one of claims 1 to 9 or the network slice control information receiving and processing method of any one of claims 10 to 19.

23. A computer-readable storage medium storing a computer program which, when executed by a processor, causes the processor to perform the network slice control information sending method of any one of claims 1 to 9 or the network slice control information receiving and processing method of any one of claims 10 to 19.
